(19) Europäisches Patentamt
European Patent Office
Office européen des brevets

(11) **EP 3 646 426 B1**

(12) **FASCICULE DE BREVET EUROPEEN**

(45) Date de publication et mention de la délivrance du brevet:
**07.12.2022 Bulletin 2022/49**

(21) Numéro de dépôt: **18732396.9**

(22) Date de dépôt: **27.06.2018**

(51) Classification Internationale des Brevets (IPC):
**H02H 5/04** (2006.01)    **F02N 11/10** (2006.01)
**H02H 7/06** (2006.01)    **H02H 7/08** (2006.01)

(52) Classification Coopérative des Brevets (CPC):
**H02H 5/04; F02N 11/106; H02H 7/06; H02H 7/0816**

(86) Numéro de dépôt international:
**PCT/EP2018/067313**

(87) Numéro de publication internationale:
**WO 2019/002403 (03.01.2019 Gazette 2019/01)**

(54) **PROCEDE DE PROTECTION DES COMPOSANTS D'UN MODULE ELECTRONIQUE DE PUISSANCE D'UN SYSTEME A ALTERNO-DEMARREUR ET SYSTEME METTANT EN OEUVRE CE PROCEDE**

VERFAHREN ZUM SCHUTZ DER KOMPONENTEN EINES LEISTUNGSELEKTRONIKMODULS EINES STARTER-GENERATOR-SYSTEMS UND SYSTEM MIT IMPLEMENTIERUNG DIESES VERFAHRENS

METHOD FOR PROTECTING THE COMPONENTS OF A POWER ELECTRONICS MODULE OF A STARTER-ALTERNATOR SYSTEM, AND SYSTEM IMPLEMENTING THIS METHOD

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **28.06.2017 FR 1755924**

(43) Date de publication de la demande:
**06.05.2020 Bulletin 2020/19**

(73) Titulaire: **Valeo Equipements Electriques Moteur 94046 Créteil Cedex (FR)**

(72) Inventeurs:
• **GUILLERM, Baptiste**
  **94046 Creteil (FR)**
• **GRANZIERA, Cyril**
  **94046 Creteil Cedex (FR)**
• **BLONDEL, Bastien**
  **94046 Creteil (FR)**

(74) Mandataire: **Valeo Powertrain Systems Service Propriété Intellectuelle Immeuble le Delta 14, avenue des Béguines 95892 Cergy Pontoise (FR)**

(56) Documents cités:
**EP-A1- 3 270 131    FR-A1- 2 797 530
US-B1- 6 809 428**

**Description**

**DOMAINE TECHNIQUE**

La présente invention concerne un procédé de protection des composants d'un module électronique de puissance d'un système à alterno-démarreur. L'invention concerne également un système mettant en œuvre ce procédé. L'invention trouve des applications dans le domaine des machines électriques tournantes pour véhicules automobiles et, en particulier, dans le domaine des machines électriques réversibles pouvant fonctionner en mode alternateur et en mode moteur.

**ETAT DE LA TECHNIQUE**

De nos jours, pour des considérations économiques et écologiques, les constructeurs automobiles cherchent à équiper leurs véhicules d'un système de démarrage/ arrêt automatique, connu sous le terme anglo-saxon de « Stop and Go ».

Ce procédé de « Stop and Go » est généralement mis en œuvre sur une machine électrique réversible, ou alterno-démarreur, couplée au moteur thermique. L'utilisation d'un alterno-démarreur dans un procédé « Stop and Go » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur traduisant sa volonté de redémarrer le véhicule. Pour ce faire, le système « Stop and Go » utilise des informations représentatives de l'état de fonctionnement du véhicule, informations provenant de capteurs du véhicule, tels que les capteurs de détection de la position de la pédale d'embrayage, ou les informations lues sur un bus de communication de données, comme la vitesse du véhicule ou la vitesse de rotation du moteur. Un exemple est le document US 6809428.

Toutefois une succession de redémarrages peut conduire à une surchauffe de l'alterno-démarreur au-delà des limites thermiques de l'électronique de puissance. En effet, bien que la phase de redémarrage ait une durée très courte, elle nécessite une puissance élevée et donc le passage d'un courant élevé - pouvant atteindre 600 à 1000 A - dans les composants du module électronique de puissance et, en particulier, dans les transistors MOSFET qui assurent le pilotage du courant dans le stator de l'alterno-démarreur. Or, les composants électroniques de puissance sont qualifiés pour atteindre une température limite, par exemple une température de l'ordre de 200°C pour un transistor MOSFET.

Une alternative à la limitation du courant d'excitation est la protection des composants électroniques de puissance par coupure d'alimentation électrique - et donc arrêt du démarrage - dès que la température d'au moins un des composants atteint un seuil prédéfini. Cette protection nécessite de déterminer précisément la température des composants électroniques de puissance et, en particulier, la température des transistors MOSFET.

Pour cela, il pourrait être envisagé de remplacer les composants électroniques de puissance classiques par des composants intelligents équipés de capteurs. Toutefois, de tels composants intelligents sont couteux. Une telle solution serait donc non seulement couteuse, mais également encombrante, compte tenu du fait qu'elle nécessiterait de nombreuses connexions et composants supplémentaires pour traiter la mesure.

**RESUME DE L'INVENTION**

Pour répondre au problème évoqué ci-dessus du risque de surchauffe des composants électroniques de puissance lors du démarrage du véhicule, le demandeur propose un procédé de protection des composants dans lequel la température des composants est estimée et comparée à une température seuil de sorte que, dès que la température estimée dépasse la température seuil, le système à alterno-démarreur s'arrête de sorte que, en mode démarreur, le démarrage du véhicule est arrêté et que, en mode alternateur, le système cesse de générer de l'électricité, tel que défini dans les revendications indépendantes 1 et 9.

Selon un premier aspect, l'invention concerne un procédé de protection des composants d'un module électronique de puissance d'un système à alterno-démarreur pour véhicule, ledit système à alterno-démarreur comportant un module de commande adapté à commander le module électronique de puissance. Ce procédé se caractérise par le fait que le courant d'alimentation du module électronique de puissance est coupé lorsqu'une température *Tjonction* d'au moins un des composants dudit module électronique de puissance est déterminée comme supérieure à une valeur prédéfinie de température seuil, ladite température de composant étant déterminée par estimation à partir de la formule :

$$Tjonction = Tleadframe + \Delta T,$$

où *Tleadframe* est la température du substrat sur lequel est monté ledit composant électronique de puissance et *ΔT* est une variation de température induite dans le composant électronique de puissance par le passage du courant dans ledit composant pendant la phase de démarrage, en fonction d'au moins une vitesse de rotation du rotor de l'alterno-démarreur, de la température du module de commande et de la valeur du courant parcourant le composant de puissance.

Ce procédé a pour avantage de protéger les composants électroniques de puissance de toute surchauffe résultant d'une augmentation de puissance dans l'alterno-démarreur pendant une phase de démarrage - ou redémarrage - du véhicule ou pendant une phase d'assistance au couple, sans augmenter le coût de fabrication dudit alterno-démarreur.

De façon avantageuse, lorsque la température *Tjonction* des composants du module électronique de puissance est déterminée comme inférieure ou égale à la valeur de température seuil, le courant d'alimentation du module électronique de puissance est coupé si la variation de température ΔT atteint une valeur d'élévation seuil. De cette façon, les composants électroniques de puissance sont protégés non seulement en cas de température élevée mais également en cas de forte élévation en température.

Selon certains modes de réalisation, la température du substrat est estimée à partir de la formule :

$$TLeadFrame = Tchip + \frac{(TStator - Tchip)}{Th\_gain}$$

où *Tchip* est la température du module de commande, *TStator* est la température d'un stator de l'alterno-démarreur et *Th_gain* est un paramètre prédéfini relatif au gain liant la température du stator et la température du module de commande. Ce mode de réalisation permet de déterminer la température du substrat sans induire aucune augmentation des coûts de fabrication de l'alterno-démarreur.

Selon d'autres modes de réalisation, la température du substrat *Tleadframe* est mesurée au moyen d'un capteur positionné sur le substrat.

Dans certaines variantes, la température du module de commande et la température du stator sont mesurées par capteurs.

Dans certains modes de réalisation, la variation *ΔT* de température est déterminée en fonction d'au moins une vitesse de rotation de l'alterno-démarreur, de la température du module de commande et d'un courant circulant dans le module électronique de puissance. Cette variation de température a l'avantage de pouvoir être calculée à partir de données mesurées ou de données approximées par des valeurs mesurées au sein de l'alterno-démarreur.

La variation *ΔT* de température peut être déterminée à partir de la formule discrétisée :

$$\Delta T_{(n)} = K_1(Speed, T_{chip}, Idc) - K_2(\Delta T_{(n-1)}) + \Delta T_{(n-1)}$$

où K est un paramètre déterminé en fonction de pertes induites par le courant dans le composant électronique de puissance et d'une capacité thermique, K1 étant déterminé au pas n, K2 étant déterminé au pas n-1.

Selon certaines variantes, le courant circulant dans le module électronique de puissance est estimé en fonction d'une valeur mesurée du courant reçu en entrée de l'alterno-démarreur.

1. Selon certaines autres variantes, le courant circulant dans le module électronique de puissance est mesuré sur chaque phase du système à alterno-démarreur.

Selon un second aspect, l'invention concerne un système à alterno-démarreur pour véhicule, comportant un ensemble rotor/stator, un module électronique de puissance et un module de commande, caractérisé en ce que le module de commande met en œuvre le procédé énoncé ci-dessus.

Avantageusement, le module de commande comporte un circuit intégré apte à déterminer au moins l'estimation de la température de composant.

Selon certains modes de réalisation, le module électronique de puissance comporte une pluralité de transistors MOSFET, protégés d'une surchauffe induite par la circulation du courant lorsque l'alterno-démarreur est en phase de démarrage ou en phase d'assistance au couple.

## BREVE DESCRIPTION DES FIGURES

D'autres avantages et caractéristiques de l'invention apparaîtront à la lecture de la description, illustrée par les figures dans lesquelles :

- La figure 1 représente un diagramme fonctionnel d'un système à alterno-démarreur selon la présente invention ;
- La figure 2 représente des exemples schématiques de courbes de températures estimées d'un transistor MOSFET du module de puissance de l'alterno-démarreur de la figure 1 ; et
- La figure 3 représente un organigramme d'un mode de réalisation du procédé selon l'invention.

## DESCRIPTION DETAILLEE D'AU MOINS UN MODE DE REALISATION

Un exemple d'un système à alterno-démarreur dans lequel le procédé de protection des composants électroniques de puissance selon l'invention est mis en œuvre est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

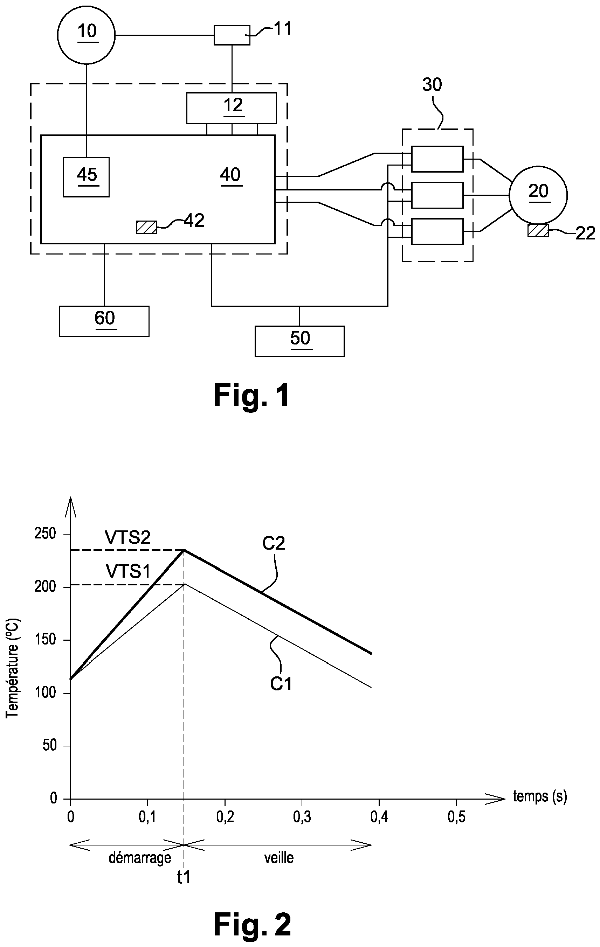

Le système à alterno-démarreur de l'invention, dont un diagramme fonctionnel est représenté sur la figure 1, est une machine électrique tournante polyphasée, réversible, alimentée par le réseau électrique de bord du véhicule quand elle fonctionne en démarreur et fournissant de l'énergie électrique à ce réseau quand elle fonctionne en alternateur.

Cette machine électrique tournante comporte un rotor 10 solidaire d'un arbre de rotation, un stator 20 monté autour du rotor et un carter portant le stator. Le carter comporte un palier avant et un palier arrière positionnés chacun à une extrémité du stator pour supporter et guider l'arbre de rotation.

Le stator comporte, sur son pourtour interne - en regard du rotor - des encoches ouvertes recevant des enroulements de phase. Ces enroulements sont des enroulements polyphasés connectés en étoile ou en triangle et dont les sorties sont reliées à un module électronique de puissance 30. Ce module électronique de puissance 30, appelé simplement module de puissance, comporte une pluralité de composants électroniques de puissance et, en particulier, des transistors de puissance connectés de façon à former des interrupteurs de commande du stator. Chacun de ces transistors de puissance est piloté par l'intermédiaire d'un module de commande 40 comportant une pluralité de composants de commande dont un microcontrôleur dont le rôle sera décrit par la suite.

Ainsi, comme représenté sur la figure 1, le système à alterno-démarreur selon l'invention comporte un module de commande 40, un module de puissance 30 et une batterie 50. La batterie 50 est connectée d'une part au module de puissance 30 et d'autre part au module de commande 40. Le module de commande 40 est connecté, de plus, directement au module de puissance 30. Le module de puissance 30 est adapté pour piloter le courant dans le stator 20. Le module de commande 40 comporte un circuit d'excitation 45 du rotor adapté pour piloter le courant dans le rotor. Le module de commande 40 est connecté également à au moins un capteur de position 12, prévu pour détecter la position d'une cible 11 liée au rotor 10, ainsi qu'à une unité de contrôle moteur 60, prévue pour transmettre des informations relatives au fonctionnement du véhicule, telles que des informations issues de divers capteurs.

Le système à alterno-démarreur de la figure 1 met en œuvre un procédé de protection des composants de puissance du module de puissance 30 pendant la phase de démarrage, ou de redémarrage, ou pendant la phase d'assistance au couple. Dans la suite de la description, le procédé sera décrit dans son application au démarrage du véhicule, étant entendu qu'il peut être appliqué également à la phase d'assistance au couple. Quelle que soit l'application, chacun de ces composants de puissance, par exemple des transistors de puissance du type transistors MOSFET, est qualifié jusqu'à une valeur de température seuil VTS prédéfinie par les fabricants des composants. Cette valeur de température seuil VTS peut être de l'ordre de 200°C pour des transistors MOSFET. Le dépassement de cette valeur de température seuil VTS peut entraîner des dommages des composants de puissance, et donc du module de puissance et, plus généralement, une diminution sensible de la durée de vie dudit module de puissance.

Il est donc important, pour protéger les composants de puissance, de déterminer la température de chacun des composants de puissance du module de puissance lors d'une phase de démarrage du véhicule. Le procédé de l'invention propose d'estimer la température de ces composants de puissance et, en fonction de cette estimation, de déterminer si la température estimée des composants de puissance ne dépasse pas la valeur de température seuil VTS.

La température d'un composant de puissance est déterminée à partir de la formule suivante :

$$Tjonction = Tleadframe + \Delta T \qquad (E1)$$

dans laquelle *Tjonction* est la température du composant de puissance que l'on cherche à estimer, *Tleadframe* est la température du substrat sur lequel est monté ledit composant de puissance et *ΔT* est une variation de température induite dans le composant de puissance par le passage du courant dans ledit composant pendant la phase de démarrage.

Selon certains modes de réalisation, la température du substrat *Tleadframe* est mesurée par un capteur positionné sur le substrat sur lequel est monté le composant de puissance.

Selon d'autres modes de réalisation, la température du substrat *Tleadframe* est déterminée également par estimation. Cette température du substrat est estimée au moyen de la formule suivante :

$$Tleadframe = Tchip + \frac{(TStator - TChip)}{Th\_gain} \quad \text{(E2)}$$

dans laquelle $Tchip$ est la température du module de commande 40, $TStator$ est la température du stator 20 de l'alterno-démarreur et $Th\_gain$ est un paramètre prédéfini relatif au gain liant la température du stator 20 et la température du module de commande 40. Ce paramètre $Th\_gain$ est constant ; il est défini préalablement à la mise en fonctionnement de l'alterno-démarreur, lors d'essais thermiques.

La température $Tchip$ du module de commande 40 est déterminée par un capteur 42 positionné sur la carte imprimée supportant le module de commande 40. La température du stator $TStator$ est déterminée par un capteur 22 positionné en sortie de phase du stator. La température du module de commande $Tchip$ est une température de l'environnement des composants de puissance, c'est-à-dire une température ambiante relativement stable. Au contraire, la température du stator $TStator$ est une température fortement variable qui évolue en fonction du courant circulant dans le stator. Ainsi, selon le procédé de l'invention, la température du substrat $Tleadframe$ est estimée comme étant la température du module de commande ajustée en fonction de la température du stator.

Dans la formule E1, la température du composant de puissance $Tjonction$ est dépendante de la variation de température $\Delta T$. Cette variation de température $\Delta T$ est l'élévation/diminution de la température dans le composant de puissance lorsque le courant traverse ledit composant de puissance pendant la phase de démarrage. Cette variation de température est directement dépendante de la conductance thermique du composant de puissance et des pertes induites par le courant dans ledit composant de puissance, d'après la relation suivante :

$$C_{th} \, d\Delta T/dt = P_{MOSFET} - G_{th}\Delta T \quad \text{(E3)}$$

où $C_{th}$ est la capacité thermique, $G_{th}$ est la conductance thermique et $P_{MOSFET}$ sont les pertes induites par le courant dans le composant de puissance.

En utilisant la transformation d'Euler, l'équation E3 peut être discrétisée avec une période d'échantillonnage Te de sorte à obtenir l'équation :

$$C_{th} \, (\Delta T(n) - \Delta T(n-1))/Te = P_{MOSFET} - G_{th}\Delta T(n) \quad \text{(E4)}$$

qui, après simplification, peut devenir :

$$\Delta T_{(n)} = K_1(Speed, Tchip, Idc) - K_2(\Delta T_{(n-1)}) + \Delta T_{(n-1)} \quad \text{(E5)}$$

avec :

- $$K_1 = [Te.P_{MOSFET} \, (Speed, Tchip, I_{DC})]/ \, C_{th},$$

et

- $$K_2 = [Te.K \, (\Delta T)]/ \, C_{th}$$

D'après l'équation E5, $\Delta T_{(n)}$ peut être déterminé dès lors que la vitesse $Speed$ du rotor, la température $Tchip$ du module de commande et la valeur du courant parcourant le composant de puissance sont connus. Or, le courant circulant dans le composant de puissance peut être estimé comme approximativement égal au courant $Idc$ entrant (ou sortant) du stator. Ce courant $Idc$ peut être mesuré dans le module de commande 40, au moyen par exemple d'un capteur à effet hall ou d'un shunt. La vitesse $Speed$ peut être déterminée par le module de commande 40 en fonction des données mesurées par le capteur de position 12. Et la température $Tchip$ du module de commande peut être mesurée, comme décrit précédemment, par le capteur 42 positionné sur la carte imprimée supportant le module de commande 40.

Dès lors que la variation de température $\Delta T$ est déterminée, et quel que soit le mode de réalisation choisi pour déterminer la température du substrat $Tleadframe$ (mesure par capteur ou estimation par la formule E2), la température du composant de puissance $Tjonction$ peut être estimée via l'équation E1. Selon le procédé de protection de l'invention, la température estimée du composant de puissance $Tjonction$ est comparée à une valeur VTS de température seuil prédéfinie. Si la température estimée du composant de puissance est inférieure ou égale à la valeur de température seuil, alors l'opération de démarrage est poursuivie. Au contraire, si, pendant la phase de démarrage, la température estimée du composant de puissance est supérieure à la valeur de température seuil, alors le courant d'alimentation du module de puissance est coupé de sorte à arrêter ladite phase de démarrage.

En coupant ainsi l'alimentation électrique du module de puissance, les composants de puissance dudit module sont protégés d'une surchauffe durant la phase de démarrage. En outre, le fait de couper l'alimentation à l'instant où la température estimée d'au moins un des composants de puissance dépasse la valeur de température seuil VTS permet de préserver une puissance de démarrage maximale le plus longtemps possible de sorte à favoriser le démarrage tout en évitant une surchauffe du/des composant(s) de puissance.

Des exemples de températures estimées d'un transistor MOSFET sont représentés de façon schématique sur la figure 2. La courbe C1 représente un exemple de température estimée lorsque le courant circulant dans le transistor MOSFET est d'environ 300A. La courbe C2 représente un exemple de température estimée lorsque le courant circulant dans le transistor MOSFET est d'environ 600A. Ces courbes C1 et C2 montrent une phase de démarrage pendant environ 150 ms puis une phase de veille pendant les environs 250 ms suivantes, la phase de veille intervenant après une coupure du courant d'alimentation à l'instant t1. Comme le montre les courbes C1 et C2, dans l'exemple de la figure 2, la valeur de température seuil VTS1 est d'environ 200°C pour la courbe C1 et la valeur de température seuil VTS2 est d'environ 240°C pour la courbe C2.

Selon certains modes de réalisation, le procédé de protection peut comporter une opération supplémentaire dans laquelle la variation de température $\Delta T$ est comparée à une valeur d'élévation de température maximale VES afin de protéger les composants de puissance d'une élévation en température trop importante. En effet, une forte augmentation de la température d'un composant de puissance - c'est-à-dire le passage rapide d'un niveau de température à un niveau de température plus élevé - peut avoir des effets néfastes sur la brasure du composant. Des modes de réalisation du procédé de l'invention proposent, tant que l'alimentation électrique du module de puissance n'est pas coupée, de vérifier si l'élévation en température du composant de puissance n'est pas supérieure à une valeur d'élévation seuil prédéfinie (par exemple de 100°C). Autrement dit, si la température estimée des composants de puissance $Tjonction$ n'atteint pas la valeur VTS de température seuil, alors la variation de température $\Delta T$ est comparée à la valeur VES d'élévation seuil. Et si l'élévation en température atteint la valeur d'élévation seuil VES, alors l'alimentation électrique du module de puissance est coupée, bien que la température des composants de puissance n'atteigne pas la valeur de température seuil prédéfinie.

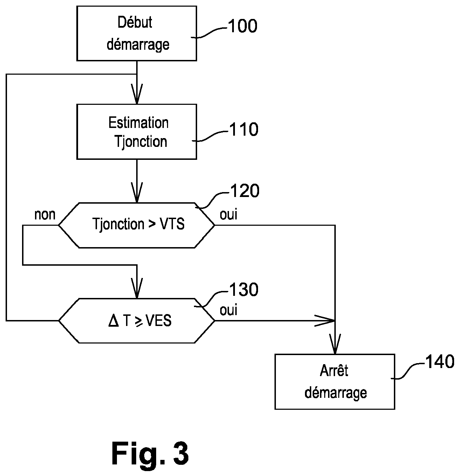

La figure 3 représente un exemple d'un diagramme fonctionnel relatif à ces modes de réalisation. Comme montré sur la figure 3, lorsque le démarrage a commencé (étape 100), la température $Tjonction$ de chaque composant de puissance est déterminée par estimation, à l'étape 110, selon le procédé décrit précédemment. La température $Tjonction$ de chaque composant de puissance est comparée à la valeur de température seuil VTS et si la température d'un seul (ou de plusieurs) composant de puissance dépasse la valeur de température seuil VTS (étape 120), alors le démarrage de l'alterno-démarreur est arrêté. Si la température d'aucun composant de puissance ne dépasse la valeur de température seuil VTS, alors le procédé se poursuit à l'étape 130 où la variation de température $\Delta T$ est comparée à la valeur d'élévation seuil VES (étape 130). Si la variation de température $\Delta T$ atteint la valeur d'élévation seuil VES, alors le démarrage est arrêté (étape 140).

L'estimation de la température des composants de puissance du module de puissance 30 telle qu'elle vient d'être décrite est mise en œuvre par un circuit intégré tel qu'un microcontrôleur intégré dans le module de commande 40. Ce microcontrôleur, par exemple un ASIC, est adapté pour calculer l'estimation de la température des composants de puissance ainsi que les comparaisons entre la température estimée des composants de puissance et la valeur de température seuil VTS et entre la variation de température $\Delta T$ et la valeur d'élévation seuil VES. Dès que le microcontrôleur détermine que la valeur de température seuil ou la valeur d'élévation seuil est atteinte, alors le module de commande 40 pilote les composants de puissance, en particulier les transistors de puissance, pour que le stator ne soit plus alimenté électriquement. La phase de démarrage est alors arrêtée. Un message d'information peut être émis par l'ordinateur de bord pour informer le conducteur des raisons de cet arrêt de la phase de démarrage.

Bien que décrit à travers un certain nombre d'exemples, variantes et modes de réalisation, le procédé de protection des composants de puissance du module de puissance d'un système à alterno-démarreur selon l'invention comprend divers variantes, modifications et perfectionnements qui apparaîtront de façon évidente à l'homme du métier, étant entendu que ces variantes, modifications et perfectionnements font partie de la portée de l'invention, telle que définie par les revendications qui suivent.

## Revendications

1. Procédé de protection des composants d'un module électronique de puissance (30) d'un système à alterno-démarreur pour véhicule, ledit système à alterno-démarreur comportant un module de commande (40) adapté à commander le module électronique de puissance (30),

**caractérisé en ce que** le courant d'alimentation du module électronique de puissance (30) est coupé lorsqu'une température (*Tjonction*) d'au moins un des composants dudit module électronique de puissance est déterminée comme supérieure à une valeur prédéfinie de température seuil (VTS), ladite température de composant étant déterminée par estimation à partir de la formule :

$$Tjonction = Tleadframe + \Delta T,$$

où *Tleadframe* est la température du substrat sur lequel est monté ledit composant électronique de puissance et *ΔT* est une variation de température induite dans le composant électronique de puissance par le passage du courant dans ledit composant pendant la phase de démarrage, la variation *ΔT* de température étant déterminée en fonction d'au moins une vitesse *(Speed)* de rotation du rotor de l'alterno-démarreur, de la température (*Tchip*) du module de commande et la valeur du courant parcourant le composant de puissance.

2. Procédé selon la revendication 1, **caractérisé en ce que**, lorsque la température (*Tjonction*) des composants du module électronique de puissance est déterminée comme inférieure ou égale à la valeur de température seuil (VTS), le courant d'alimentation du module électronique de puissance est coupé si la variation de température *ΔT* atteint une valeur d'élévation seuil (VES).

3. Procédé selon la revendication 1 ou 2, **caractérisé en ce que** la température du substrat est estimée à partir de la formule :

$$TLeadFrame = Tchip + \frac{(TStator - Tchip)}{Th\_gain}$$

où *Tchip* est la température du module de commande, *TStator* est la température d'un stator de l'alterno-démarreur et *Th_gain* est un paramètre prédéfini relatif au gain liant la température du stator et la température du module de commande.

4. Procédé selon la revendication 1 ou 2, **caractérisé en ce que** la température du substrat *(Tleadframe)* est mesurée au moyen d'un capteur positionné sur le substrat.

5. Procédé selon la revendication 3 ou 4, **caractérisé en ce que** la température du module de commande et la température du stator sont mesurées par capteurs.

6. Procédé selon la revendication 5, **caractérisé en ce que** la variation *ΔT* de température est déterminée à partir de la formule discrétisée :

$$\Delta T_{(n)} = K_1(Speed, Tchip, Idc) - K_2(\Delta T_{(n-1)}) + \Delta T_{(n-1)}$$

où K est un paramètre déterminé en fonction de pertes induites par le courant dans le composant électronique de puissance et d'une capacité thermique, K1 étant déterminé au pas n, K2 étant déterminé au pas n-1.

7. Procédé selon la revendication 6, **caractérisé en ce que** le courant circulant dans le module électronique de puissance est estimé en fonction d'une valeur mesurée du courant *(Idc)* reçu en entrée ou sortie du stator de l'alterno-démarreur.

8. Procédé selon la revendication 6, **caractérisé en ce que** le courant circulant dans le module électronique de puissance est mesuré sur chaque phase du système à alterno-démarreur.

9. Système à alterno-démarreur pour véhicule, comportant un ensemble rotor/stator (10/20), un module électronique de puissance (30) et un module de commande (40), **caractérisé en ce que** le module de commande est adapté pour commander le module électronique de puissance (30) en coupant le courant d'alimentation du module électronique de puissance (30) lorsqu' une température (*Tjonction*) d'au moins un des composants dudit module électronique de puissance est déterminée comme supérieure à une valeur prédéfinie de température seuil (VTS), ladite température de composant étant déterminée par estimation à partir de la formule :

$$Tjonction = Tleadframe + \Delta T,$$

où *Tleadframe* étant la température du substrat sur lequel est monté ledit composant électronique de puissance et $\Delta T$ étant une variation de température induite dans le composant électronique de puissance par le passage du courant dans ledit composant pendant la phase de démarrage, la variation $\Delta T$ de température étant déterminée en fonction d'au moins une vitesse *(Speed)* de rotation du rotor de l'alterno-démarreur, de la température (*Tchip*) du module de commande et la valeur du courant parcourant le composant de puissance.

10. Système selon la revendication 9, **caractérisé en ce que** le module de commande (40) comporte un circuit intégré apte à déterminer au moins l'estimation de la température de composant.

11. Système selon la revendication 10, **caractérisé en ce que** le module électronique de puissance comporte une pluralité de transistors MOSFET, protégés d'une surchauffe induite par la circulation du courant lorsque l'alterno-démarreur est en phase de démarrage.

**Patentansprüche**

1. Verfahren zum Schutz der Komponenten eines Leistungselektronikmoduls (30) eines Starter-Generator-Systems für ein Fahrzeug, wobei das Starter-Generator-System ein Steuermodul (40) umfasst, das dazu angepasst ist, das Leistungselektronikmodul (30) zu steuern, **dadurch gekennzeichnet, dass** der Versorgungsstrom des Leistungselektronikmoduls (30) abgeschaltet wird, wenn eine Temperatur (*Tjonction*) mindestens einer der Komponenten des Leistungselektronikmoduls als größer als ein vordefinierter Temperaturschwellenwert (VTS) bestimmt wird, wobei die Komponententemperatur durch Schätzung anhand der folgenden Formel bestimmt wird:

$$Tjonction = Tleadframe + \Delta T,$$

wobei

*Tleadframe* die Temperatur des Substrats ist, auf dem die Leistungselektronikkomponente montiert ist, und $\Delta T$ eine Temperaturänderung ist, die durch den Durchgang des Stroms durch die Komponente während der Anlaufphase in der elektronischen Komponente erzeugt wird,
wobei die Temperaturänderung $\Delta T$ in Abhängigkeit von mindestens einer Drehzahl (*Speed*) des Rotors des Starter-Generators, der Temperatur *(Tchip)* des Steuermoduls und dem Wert des Stroms, der durch die Leistungskomponente hindurchgeht, bestimmt wird.

2. Verfahren nach Anspruch 1, **dadurch gekennzeichnet, dass**, wenn die Temperatur *(Tjonction)* der Komponenten des Leistungselektronikmoduls als kleiner als oder gleich dem Temperaturschwellenwert (VTS) bestimmt wird, der Versorgungsstrom des Leistungselektronikmoduls abgeschaltet wird, wenn die Temperaturänderung $\Delta T$ einen Erhöhungsschwellenwert (VES) erreicht.

3. Verfahren nach Anspruch 1 oder 2, **dadurch gekennzeichnet, dass** die Temperatur des Substrats anhand der folgenden Formel geschätzt wird:

$$TLeadFrame = Tchip + \frac{(TStator - Tchip)}{Th\_gain}$$

wobei *Tchip* die Temperatur des Steuermoduls ist, *TStator* die Temperatur eines Stators des Starter-Generators ist und *Th_gain* ein vordefinierter Parameter bezüglich der Verstärkung (Gain) ist, der die Temperatur des Stators mit der Temperatur des Steuermoduls in Beziehung setzt.

4. Verfahren nach Anspruch 1 oder 2, **dadurch gekennzeichnet, dass** die Temperatur des Substrats *(Tleadframe)* mit Hilfe eines Sensors gemessen wird, der auf dem Substrat positioniert ist.

**5.** Verfahren nach Anspruch 3 oder 4, **dadurch gekennzeichnet, dass** die Temperatur des Steuermoduls und die Temperatur des Stators durch Sensoren gemessen werden.

**6.** Verfahren nach Anspruch 5, **dadurch gekennzeichnet, dass** die Temperaturänderung $\Delta T$ anhand der folgenden diskretisierten Formel bestimmt wird:

$$\Delta T_{(n)} = K_1(Speed, Tchip, Idc) - K_2\big(\Delta T_{(n-1)}\big) + \Delta T_{(n-1)}$$

wobei K ein Parameter ist, der in Abhängigkeit von Verlusten, die durch den Strom in der Leistungselektronikkomponente erzeugt werden, und einer Wärmekapazität bestimmt wird, wobei K1 in Schritt n bestimmt wird und K2 in Schritt n-1 bestimmt wird.

**7.** Verfahren nach Anspruch 6, **dadurch gekennzeichnet, dass** der Strom, der in dem Leistungselektronikmodul fließt, in Abhängigkeit von einem gemessenen Wert des Stroms (*Idc*), der am Eingang oder Ausgang des Stators des Starter-Generators empfangen wird, geschätzt wird.

**8.** Verfahren nach Anspruch 6, **dadurch gekennzeichnet, dass** der Strom, der in dem Leistungselektronikmodul fließt, in jeder Phase des Starter-Generator-Systems gemessen wird.

**9.** Starter-Generator-System für ein Fahrzeug, umfassend eine Rotor/Stator-Anordnung (10/20), ein Leistungselektronikmodul (30) und ein Steuermodul (40), **dadurch gekennzeichnet, dass** das Steuermodul dazu angepasst ist, das Leistungselektronikmodul (30) zu steuern, indem es den Versorgungsstrom des Leistungselektronikmoduls (30) abschaltet, wenn eine Temperatur (*Tjonction*) mindestens einer der Komponenten des Leistungselektronikmoduls als größer als ein vordefinierte Temperaturschwellenwert (VTS) bestimmt wird, wobei die Komponententemperatur durch Schätzung anhand der folgenden Formel bestimmt wird:

$$Tjonction = Tleadframe + \Delta T,$$

wobei

*Tleadframe* die Temperatur des Substrats ist, auf dem die Leistungselektronikkomponente montiert ist, und $\Delta T$ eine Temperaturänderung ist, die durch den Durchgang des Stroms durch die Komponente während der Anlaufphase in der elektronischen Komponente erzeugt wird,
wobei die Temperaturänderung $\Delta T$ in Abhängigkeit von mindestens einer Drehzahl (*Speed*) des Rotors des Starter-Generators, der Temperatur *(Tchip)* des Steuermoduls und dem Wert des Stroms, der durch die Leistungskomponente hindurchgeht, bestimmt wird.

**10.** System nach Anspruch 9, **dadurch gekennzeichnet, dass** das Steuermodul (40) eine integrierte Schaltung umfasst, die dazu fähig ist, mindestens die Schätzung der Komponententemperatur zu bestimmen.

**11.** System nach Anspruch 10, **dadurch gekennzeichnet, dass** das Leistungselektronikmodul eine Vielzahl von MOSFET-Transistoren umfasst, die während der Anlaufphase des Starter-Generators vor einer Überhitzung, die durch das Fließen von Strom erzeugt wird, geschützt werden.

**Claims**

**1.** Method of protecting the components of a power electronics module (30) of a starter-alternator system for a vehicle, said starter-alternator system comprising a control module (40) designed to control the power electronics module (30),

**characterized in that** the supply current of the power electronics module (30) is disconnected when a temperature *(Tjunction)* of at least one of the components of said power electronics module is determined as being greater than a predefined temperature threshold value (VTS), said component temperature being determined by estimation using the formula:

$$Tjunction = Tleadframe + \Delta T,$$

where *Tleadframe* is the temperature of the substrate on which said power electronics component is mounted and $\Delta T$ is a change in temperature induced in the power electronics component by the current passing through said component during the start-up phase,

the change $\Delta T$ in temperature being determined as a function of at least a rotational speed *(Speed)* of the rotor of the starter-alternator, of the temperature *(Tchip)* of the control module and the value of the current travelling through the power component.

2.  Method according to Claim 1, **characterized in that**, when the temperature *(Tjunction)* of the components of the power electronics module is determined as being less than or equal to the temperature threshold value (VTS), the supply current of the power electronics module is disconnected if the change in temperature $\Delta T$ reaches a rise threshold value (VES).

3.  Method according to Claim 1 or 2, **characterized in that** the temperature of the substrate is estimated using the formula:

$$TLeadFrame = Tchip + \frac{(TStator - Tchip)}{Th\_gain}$$

where *Tchip* is the temperature of the control module, *TStator* is the temperature of a stator of the starter-alternator and *Th_gain* is a predefined parameter relating to the gain linking the temperature of the stator and the temperature of the control module.

4.  Method according to Claim 1 or 2, **characterized in that** the temperature of the substrate *(Tleadframe)* is measured by means of a sensor positioned on the substrate.

5.  Method according to Claim 3 or 4, **characterized in that** the temperature of the control module and the temperature of the stator are measured by sensors.

6.  Method according to Claim 5, **characterized in that** the change $\Delta T$ in temperature is determined using the discretized formula:

$$\Delta T_{(n)} = K_1(Speed, Tchip, Idc) - K_2(\Delta T_{(n-1)}) + \Delta T_{(n-1)}$$

where K is a parameter determined as a function of losses induced by the current in the power electronics component and of a heat capacity, K1 being determined at step n, K2 being determined at step n-1.

7.  Method according to Claim 6, **characterized in that** the current flowing through the power electronics module is estimated as a function of a measured value of the current *(Idc)* received at the input or output of the stator of the starter-alternator.

8.  Method according to Claim 6, **characterized in that** the current flowing through the power electronics module is measured on each phase of the starter-alternator system.

9.  Starter-alternator system for a vehicle, comprising a rotor/stator assembly (10/20), a power electronics module (30) and a control module (40), **characterized in that** the control module is designed to control the power electronics module (30) by disconnecting the supply current of the power electronics module (30) when a temperature *(Tjunction)* of at least one of the components of said power electronics module is determined as being greater than a predefined temperature threshold value (VTS), said component temperature being determined by estimation using the formula:

$$Tjunction = Tleadframe + \Delta T,$$

where

*Tleadframe* is the temperature of the substrate on which said power electronics component is mounted and $\Delta T$ is a change in temperature induced in the power electronics component by the current passing through said component during the start-up phase,

the change $\Delta T$ in temperature being determined as a function of at least a rotational speed *(Speed)* of the rotor of the starter-alternator, of the temperature *(Tchip)* of the control module and the value of the current travelling through the power component.

10. System according to Claim 9, **characterized in that** the control module (40) comprises an integrated circuit capable of determining at least the estimation of the component temperature.

11. System according to Claim 10, **characterized in that** the power electronics module comprises a plurality of MOSFET transistors which are protected from overheating induced by the flow of the current when the starter-alternator is in start-up phase.

**Fig. 1**

**Fig. 2**

```
         ┌──────────────┐
         │    Début     │──100
         │  démarrage   │
         └──────┬───────┘
                │
                ▼
         ┌──────────────┐
         │  Estimation  │──110
         │   Tjonction  │
         └──────┬───────┘
                │
                ▼
  non    ╱─────────────╲  ──120
   ◄─────  Tjonction > VTS  ───► oui
         ╲─────────────╱
                │
                ▼
        ╱──────────────╲  ──130
         │  Δ T ≥ VES   │ ──► oui
        ╲──────────────╱
                          │
                          ▼
                   ┌──────────────┐
                   │    Arrêt     │──140
                   │  démarrage   │
                   └──────────────┘
```

# Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6809428 B